# EUROPEAN PATENT APPLICATION

(11) **EP 0 571 335 A1**
(43) Date of publication of application: **24.11.1993**
(21) Application number: 93830151.2
(22) Date of filing: 07.04.1993
(51) Int. Cl.: A23G 9/14, A23G 9/28

(54) **Plant for the production of blocks of ice cream**

(30) Priority: 08.05.1992 IT RM920348
(71) Applicant: PROCMA S.r.l., I-04016 Sabaudia (LT) (IT)
(72) Inventor: Pagliarella, Tonino, I-04016 Pontina (LT) (IT)
(74) Representative: Lanzoni, Luciano

(57) **Abstract**

The invention relates to a plant for the production of ice cream blocks of the type comprising, in continuous phase synchrony, at least: a tray line (1) for the advancement of the blocks of ice cream on the like, from a freezing zone (2) to successive work operation zones (3); a conveyor (4) having a dounle series of transporters of pincers for the gripping and lifting of the ice cream blocks from the said tray line (1) for successive wor operations; and line (5) having a double series of buckets, receivig from the said pincer conveyor (4) the ice cream blocks already subjected to futher work operations, and sending the said blocks to wrapping zones (7). According to the invention, the plant also comprises a translating device (6), situated above the said tray line (1) and the said bucket line (5), equipped with suction means for the gripping and releasing of the said blocks, and operating the translation of the pieces not destined for further work operations from the said tray line (1) to the said bucket line (5).

## Description

The invention relates to a plant for the production of blocks of ice cream or the like equipped with a translating device of the said blocks from one advancement line to another. More in particular, the invention refers to a plant for the production of blocks of ice cream of the type wherein a tray line advances the said blocks of ice cream from a freezing zone to successive work zones, such as chocolate-covering zones, zones for the application of syrups, zones for the application of further layers of ice-cream, or similar; a wheel having a double series of conveyors of pincers to move the blocks from the said tray line to the stations for successive operations, such as the immersion of the same in baths containing correpsonding substances and their drying; a line having a double series of buckets finally receives the blocks from the said wheel with a double series of pincers, which blocks have been subjected to the said successive operations, and sends them to the wrapping area.

In a plant such as the one mentioned above, the problem arises of having to send blocks of ice cream directly to the wrapping zone when the said blocks are not to be subjected to any work operations beforehand.

The invention aims to solve this problem by realising the translation of the tray line, upstream of the pincer wheel, to the double-bucket line; this operation to be performed together with the advancement of other blocks on the double bucket series line to be subjected to other work operations, up until the pincer wheel, and thus to the double bucket series line. More precisely, the aim of this invention is to obtain with one plant only both the possibility of producing ice cream blocks requiring the said work operations through a pincer wheel and the possibility of sending finished ice cream blocks directly to the wrapping station without having to perform modifications to the plant, and maintaining the synchronised phased movement of the plant.

The invention, as it is characterised in the claims that follow, solves the problem of providing a plant for the production of ice cream blocks and the like equipped with a translating device of the said ice cream blocks from one advancement line to another, comprising in continuous movement phased synchrony at least:
- a tray line for the advancing of ice cream blocks or the like, from a freezing zone to successive work operation zones;
- a conveyor having a double series of conveyors of pincers for the gripping and lifting of the ice cream blocks from the said tray line for successive work operations;
- a line having a double series of buckets, which line receives the ice cream blocks from the said pincer conveyor after they have undergone further work operations, and which line sends the said blocks to wrapping stations;

the steps of the ice cream blocks, the pincers and the buckets being equal and the distances between the lines of that same also being equal;
the above plant from a general point of view being characterised in that it further comprises, in continuous movement and in phase synchrony, for the said blocks arranged in order on at least two parallel conveyor lines, whether on the said trays or in the said pincers or in the said buckets:
- a first tract of the said tray line and a first tract of the said line having a double series of buckets, adjacent and parallel among themselves;
- a translating device, located above the said tray line and bucket line, at the relative adjacent and parallel tracts; the said translator comprising an arm which is mobile in two mutually-orthogonal directions lying in a plane which is parallel to the plane containing the advancement direction of the said tray and bucket lines, the said arm being equipped with suction means, having step and distances between the lines which are equal to the said step and distances of the blocks, the trays and the buckets, and performing the translation of the blocks which are not destined for further work operations from the said tray line to the said bucket line;
- a second tract of the said bucket line, located, with respect to the advancement direction of the line, upstream of the said first tract of bucket line, in a position which is angled at an angle α with respect to a second tract of tray line situated downstream of the said first tract of tray line; the said first and said second tracts of the bucket line being connected by a connection having a curvature R5b in the internal series of buckets and a curvature R5c in the external series of buckets;
- drive organs of the said conveyors of the said pincers conveyor, envisaged between the said second tract of bucket line and the said second tract of tray line, in such a way that the said pincers are arranged parallel to the said tray line and the said bucket line in their said second tracts; the said drive organs being constituted by identical cogged wheels having identical numbers of teeth;

the translating device and the conveyor being alternately and together activatable and de-activatable with a maintaining of the phase synchrony for the movement of the blocks from the extreme positions of exit from the said freezing zones and entrance into the said wrapping zones.

Further characteristics and advantages of the present invertion will better emerge from the detailed description that follows, of an embodiment of the invention, herein illustrated purely in the form of a non-limiting example in the accompaying figures, in which:

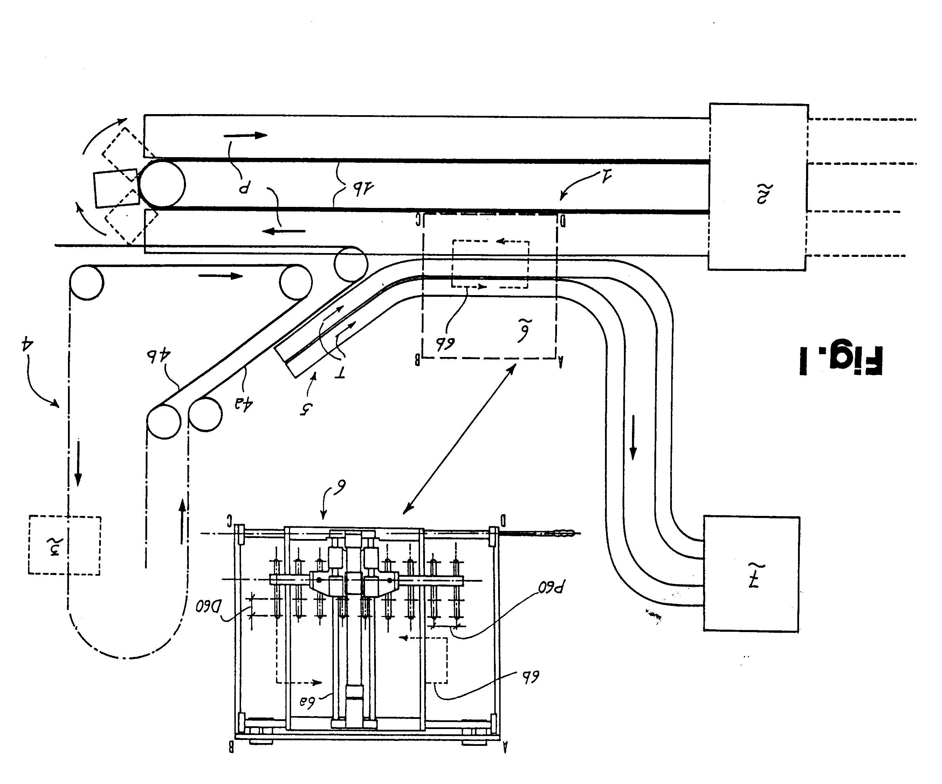

- Figure 1 shows, schematically in a plan view from above, and partially sectioned, a translating device according to the invention of ice cream blocks or the like from one advancement line to another of a plant for the production of the said blocks, the aid translating device being described in the figure by a broken line, and shown in extract in the form of a particular;

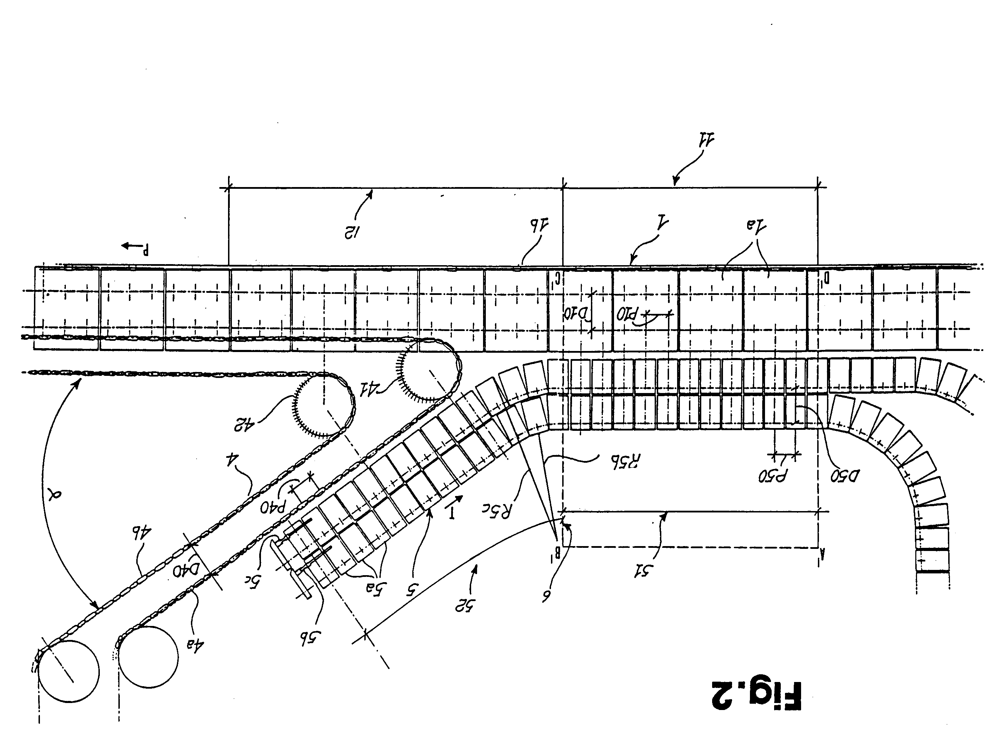

- Figure 2 shows, schematically and in plan view from above a portion of a plant for the production of ice cream blocks and the like in a preferred embodiment according to the invention, in which the dotted line, framed by a broken line A'-B'-C'-D' has the translating device as represented in figure 1 positioned above it.

With reference to the invention, in the figures 1 denotes a tray line, and 2 a freezing zone, while 3 denotes areas for further work operations, 4 a conveyor line bearing a double series of pincers, 5 a line comprising a double series of buckets, 6 a translating device and 7 a wrapping area.

With reference to figure 2, the tray line and the bucket line 5 are conveyors, substantially of known type, suitable for their relative functions, The trays 1a of the tray line 1, conveyed by a chain 1b singly bear six ice cream blocks arranged on the intersections of the broken and dotted lines. The couples of buckets 5a, conveyed by chains 5b and 5c bear two ice cream blocks each, one block for each bucket. The pincer conveyor 4 is also a conveyor of known type having pincer carrying chains with pincers (not in the figures) connected at 45 degrees to the vertical to two distinct chains 4a and 4b. The pincers are for the movement of ice cream blocks for the purpose of determined work operations, such as their covering with chocolate, with syrups or with other layers of ice cream, and the like.

The translating device 6, of known type, schematically illustrated in the particular of figure 1, comprises an arm 6a which is mobile in two mutually-orthogonal directions and lying in a plane which is parallel to the plane containing the advancement directions of the tray line and the bucket line. The arm 6a, equipped with suction means (not represented in detail in the figures) for the gripping and the release of the blocks, performs the translation of the blocks which are not destined for further work operations from the tray line 1 to the bucket line 5.

According to the invention, a functional whole is formed by the tray line 1, the pincer wheel 4 and the bucket line 5 with the translating device 6. In order that the said functional whole can be realised the steps P10, P40, P50 respectively between the blocks of ice cream, the pincers and the buckets are equal, and the distances D10, D40, D50 respectively between the lines of blocks, the pincers and the buckets are also equal.

Furthermore, a first tract 11 of the tray line 1 and a first tract 51 of the line having a double bucket series 5 are adjacent and parallel to each other.

A second tract 52 of the bucket line 5 is situated, with respect to the advancement direction of the bucket line itself, indicated by the arrow T, upstream of the first tract 51 of the bucket line 5, in an angled position α with respect to a second tract 12 of tray line 1 situated downstream of the first tract 11 of tray line 1, with respect to the advancement direction of the tray line 1 iteself indicated by arrow P.

The second tract 52 of the bucket line 5 is connected to the first tract 51 of the said tray line 1 by a curvature R5b and R5c respectively for the internal series of buckets and for the external series of buckets.

The translating device 6 is situated above the tray line 1 and the bucket line 5, at the said relative first adjacent and parallel tracts 11 and 51, in the zone indicated by the broken fine A' -B'-C'-D', and the line A-B-C-D of figure 1.

In the zone defined by angle α between the second tract 52 of the bucket line 5 and the second tract 12 of the tray line 1 are positioned drive organs 41, 42 of the transport chains 4a 4b of the conveyor 4 pincers, in such a way that the said chains 4a and 4b and the relative pincers are arranged parallel to the tray line 1 and the bucket line in their second tracts 12 and 52.

The drive organs 41, 42 are constituted by identical cogged wheels having an identical number of teeth.

In one embodiment, according to the design shown in figure 2, the steps P10, P40, P50, P60 between the ice cream blocks, the pincers, the buckets and the suction means of the translating device are 95.25mm; the distances D10, D40, D50, D60 between the lines of blocks, pincers, buckets and suction means of the translating device are 154.7mm; the cogged wheels 41, 42, have 45 teeth with a step of 19.05mm, the angle formed between the second angled tract 52 of bucket line 5 with respect to the second tract 12 of tray line 1 is 36 degree, while the curvatures R5a and R5b, respectively for the internal bucket line 5a and for the external bucket line 5b are 424.50mm and 576.09mm.

During the functioning of the plant according to the invention, the ice cream blocks exit at a constant speed from the freezing zone 1, arranged on the trays 1a of the tray line 1 in ranks of three blocks of two line for each tray.

The products to be subjected to further work operations, for example covering with chocolate, are taken off the trays 1a in the second tract 12 of the tray line 1 by means of the pincer conveyor 4, which moves at a constant speed identical to that of the tray line. The chocolate-covering operation of the blocks removed by the pincers is performed by Immersion for example in a bath (not in the figures 9 (zone 3 of figure 1). The run of the pincers is sufficiently long to permit the drying of the covering. At the end the blocks are deposited by the pincers on the second tract 52 of the bucket line 5, which through a curved course, represented only in part in figure 2, leads to the wrapping zone 7.

The products which are not to be subjected to further work operations are taken by the trays 1a by means of the translating device 6 with suction means, which moves in an alternating direction, first in the direction of the trays and then in the opposite sense.

During this run the blocks are deposited on the bucket line 5 in the first tract 51 of the said bucket line 5, which through this curved run leads to the wrapping zone 7.

According to the invention, the translating device 6 and the wheel 4 are activatable and deactivatable alternatingly or together with a maintenance of the phase synchrony for the movement of the ice cream blocks from the freezing zone to the wrapping zone.

## Claims

1. A plant for the production of ice cream blocks and the like equipped with a translating device of the said ice cream blocks from one advancement line to another, comprising in continuous movement phased synchrony at least:
- a tray line (1) for the advancing of ice cream blocks or the like, from a freezing zone (2) to successive work operation zones (3);
- a conveyor (4) having a double series of conveyors of pincers for the gripping and lifting of the ice cream blocks from the said tray line (1) for successive work operations;
- a line (5) having a double series of buckets, which line receives the ice cream blocks from the said pincer conveyor (4) after they have undergone further work operations, and which line (5) sends the said blocks to wrapping stations (7);
the steps (P10, P40, P50) of the ice cream blocks, the pincers and the buckets being equal and the distances between the lines of the said blocks, pincers and buckets also being equal;
characterised in that it further comprises, in continuous movement and in phase synchrony, for the said blocks arranged in order on at least two parallel conveyor lines, whether on the said trays or in the said pincers or in the said buckets:
- a first tract (11) of the said tray line (1) and a first tract (51) of the said line (5) having a double series of buckets, which tracts (11, 51) adjacent and parallel among themselves;
- a translating device (6), located above the said tray line (1) and bucket line (5), at the relative adjacent and parallel tracts; the said translator (6) comprising an arm (6a) which is mobile in two mutually-orthogonal directions lying in a plane which is parallel to the plane containing the advancement directions (P, T) of the said tray and bucket lines (1 and 5 respectively), the said arm (6a) being equipped with suction means for the gripping and releasing of the said blocks, having steps (P60) and distances (D60) between the lines which are equal to the said steps (P10), (P40), (P50) and distances (D10), (D40), (D50) of the blocks, the trays and the buckets, and performing the translation of blocks not destined for further work operations from the said tray line (1) to the said bucket line (5);
- a second tract (52) of the said bucket line (5), located, with respect to the advancement direction (T) of the line (5), upstream of the said first tract (51) of bucket line, in a position which is angled at an angle α with respect to a seccnd tract of tray line (12) situated downstream of the said first tract (11) of tray line; the said first (51) and said second (52) tracts of the bucket line being connected by a connection having a curvature (R5b) in the internal series (5b) of buckets and a curvature (R5c) in the external series (5c) of buckets;
- drive organs of the said conveyors of the said pincer conveyors (4), envisaged between the said second tract (52) of bucket line (5) and the said second tract (12) of tray line (1), in such a way that the said pincers are arranged parallel to the said tray line (1) and the said bucket line (5) in their said second tracts (12 and 52); the said drive organs being constituted by identical cogged wheels (41, 42) having identical numbers of teeth; the translating device (6) and the conveyor (4) being alternately and together activatable and de-activatable with a maintaining of the phase synchrony for the movement of the blocks from the extreme positions of exit from the said freezing zones (2) and entrance into the said wrapping zones (7).

2. A plant as in claim 1, characterised in that the said steps (P10, P40, P50, P60) between the ice cream blocks, the pincers and the buckets are 95.25mm; that the distances (D10, D40, D50, D60) between the line of ice cream blocks, the pincers and the buckets are 154.7mm; that the said cogged wheels (41, 42) have 45 teeth, with a step of 19.05mm, that the angle formed between the said second angled tract (52) of double lines of buckets (52) and the said second tract (12) of tray line (1) is 36 degrees, and the curvatures (R5b R5c) respectively of the said internal series of buckets (5b) and of the said external series of buckets (5c) are 424.50mm and 576.09mm.
